# EUROPEAN PATENT APPLICATION

(11) **EP 2 026 252 A2**
(43) Date of publication of application: **18.02.2009**
(21) Application number: 08161888.6
(22) Date of filing: 06.08.2008
(51) Int. Cl.: G06K 19/06, G06F 3/12, G06F 21/00, G06Q 10/00, B42C 19/00

(54) **A printing job control system and method**

(30) Priority: 07.08.2007 US 890574
(71) Applicant: Xerox Corporation, Rochester, New York 14644 (US)
(72) Inventor: Mestha, Lalit K, Fairport, NY 14450 (US); Fisher, Peter S, Pasadena, CA 91107 (US); Gil, Alvaro E, Rochester, NY 14618 (US); Love, Tonya L, Rochester, NY 14623 (US)
(74) Representative: Skone James, Robert Edmund

(57) **Abstract**

Disclosed is an invisible encoding system which can be used for tracking printing jobs. Specifically, this disclosure provides a system and method of encoding sheets of a printing job, where the encoding (12-68) is invisible to the human naked eye and the encoded information may be permanently fixed to the finished printed product.

## Description

This disclosure relates to printing systems and/or printing system job management. Specifically, this disclosure relates to a substantially invisible media sheet encoding system which is used to manage printing jobs.

Printing production shops today may use many different printing processes and/or printing systems to complete a printing job for a customer. For example, for a specific printing job, such as a book, the printing production shop may print the inside pages of the book using a first printing process and print the book cover using a second printing process. After completion of the first printing process and second printing process, the printed outputs will be assembled either manually or by an automated finisher. Due to the nature of a distributed printing infrastructure, printing processes require efficient management of printed outputs.

Conventionally, in order to maintain a print job integrity and indentify the outputs of a particular printer, identifiers are attached to a banner sheet which may identify the printer output for further processing by the printing production shop. These identifiers can include visible data glyphs, bar codes or Radio Frequency Identification Tags which are read by a sensor which is integrated with a print job controller.

Other means of tracking the components of a print job include marking one or more sheets of the print job with the visible identifiers listed above, where the identifiers are visible to the customer within the completed print job. For example, a bar code printed on a cover or inside page of a printed book.

Some drawbacks associated with the visible marking of print job identifiers, as discussed above, are the generation of waste in the case of a banner sheet, and the generation of visible markings which become part of the finished printed product and may be displeasing to the customer.

This disclosure provides a means for managing the output of one or more printing systems using print job identifiers which are invisible to the human naked eye.

In one aspect of this disclosure, an encoding system is disclosed. The encoding system comprises a marking substrate; a spot color marking device adapted to mark one or more spot colors on the substrate; and a spectrophotometer adapted to read one or more spot colors marked on the substrate, wherein the marking device is configured to control the density of the one or more spot colors to less than a predetermined threshold density value associated with the spot color to produce a spot color substantially undetectable by a human naked eye.

In another aspect of this disclosure, a print job encoding system is disclosed. The print job encoding system comprises a spot color marking device adapted to mark a spot color on a print media in a predetermined pattern, the spot color density controlled to be less than or equal to a predetermined threshold density value, wherein a marked spot color on the print media is substantially undetectable by a human naked eye; a spectrophotometer adapted to measure the relative light intensity associated with the print media and the spot colors marked on the print media; and a controller operatively connected to the spectrophotometer, the controller configured to decode the predetermined pattern, wherein the relative light intensity of the print media and the spot color marked on the print media provide a first binary state and a second binary state, respectively.

In another aspect of this disclosure, a method of encoding one or more print jobs is disclosed. The method of encoding one or more print jobs comprises marking one or more print media associated with one or more respective print jobs, wherein the one or more print media is marked with a spot color producing a predetermined spot color pattern on the print media, and the spot color is less than or equal to a predetermined threshold density value to produce a spot color marked on the print media which is substantially undetectable by a human naked eye; and reading the predetermined spot color pattern with a spectrophotometer, wherein the relative intensity of the print media and the spot color marked on the print media represent a first and second binary state, respectively, the sequence of the first and second binary states representing attributes and/or commands associated with a print job.

In another aspect of this disclosure, a xerographic printing system is disclosed. The xerographic printing system comprises a color image marking device; and a spectrophotometer operatively connected to the color image marking device wherein the color image marking device is adapted to mark a print media with a yellow spot color bar code, the yellow spot mark density less than or equal to 4%, and the spectrophotometer reads the yellow spot color bar code representing attributes or commands associated with a print job.

Some examples of encoding methods and apparatus according to the invention will now be described with reference to the accompanying drawings, in which:

FIGURE 1 illustrates an encoded sheet according to an exemplary embodiment of this disclosure;

FIGURE 2 illustrates a printing system according to an exemplary embodiment of this disclosure;

FIGURE 3 is a flow chart illustrating an exemplary method of operating a printing system according to this disclosure;

FIGURE 4 is a graph illustrating DeltaE2000 plots with respect to paper while for 255 yellow patches (five copies);

FIGURE 5 is a graph illustrating DeltaE2000 plots with respect to paper white for the first 12 yellow patches of FIGURE 4 (five copies);

FIGURE 6 is a table illustrating where active patches are developed for yellow coverage to represent a hexadecimal number on each sheet according to an exemplary embodiment of this disclosure;

FIGURE 7 illustrates DeltaE2000 Values w.r.t. to white patches for the hexadecimal numbers illustrated in FIGURE 6; and

FIGURES 8-10 illustrate an ASCII character set for use with an encoding system according to an exemplary embodiment of this disclosure.

In this disclosure, provided is an invisible symbology which is placed on a cover of the book or specially designated job integrity sheet that customers use to track a specific print job. According to one exemplary embodiment, invisible yellow patches are printed to code print job tracking information, the patches having a digital count of around 10 (<4%). An embedded inline spectrophotometer is utilized to measure the invisible patches to track and manage the complete finished job electronically. The inline spectrophotometer has capabilities to distinguish yellow patches that are invisible to human eye. Also provided are experimental results to confirm the disclosed measurement approach.

In an enterprise-wide production shop due to the nature of a distributed infrastructure, printing processes require efficient management of printed outputs. All aspects of output management solution should be able to handle the process for a digital document from the point of creation to the point of delivery. For example, w hile printing books, cover pages are often printed on a different/same printer at different time. They are sent to the finishing modules/stations for automatic binding with text pages. Sometimes, there is a mismatch between the cover page and the text pages of the book. This can lead to loss of job integrity and hence increases in waste. DataGlyphs, as disclosed in U.S. Patent No. 6,327,395, bar codes and RFIDs are often used to track printed media. DataGlyphs and bar codes are printed outside/inside the book cover sheet to automatically match the cover sheet with the rest of the sheets. Instead of visible bar code markers, many print production shops would prefer to put an invisible symbology on the cover sheet of each book. This disclosure provides a spectrophotometric solution for job integrity applications to read invisible symbology on a cover sheet (outside or inside of the page) insitu or offline. For offline use, a separate spectrophotometer is required to read the invisible marks.

This disclosure relates to encoding information for tracking and monitoring finished print jobs with invisible marking sensing. It includes producing a pattern, such as patches, on a cover sheet such as book/magazine cover sheet or a job banner sheet, to track the job with spectrophotometric sensors. In this disclosure, provided are invisible characters printed on the cover page of the book/job to be tracked where the cover page is part of the finished product.

According to one aspect of this disclosure, 8 to 10 characters of information are coded in the patches. The inline spectrophotometer reads the yellow patches that are invisible to the human eye. Because the spectral sensor is capable of reading invisible marks, job integrity is achieved.

According to one Scenario for book printing & finishing, consider a print production shop wanting to produce books. The print production shop receives orders for the production of perfect-bound books from the Internet. Each order can involve several books, sometimes with different book sizes. The covers of these books are printed on a first production press and lamination is done off-line. After the covers are laminated, the covers are placed in the cover feeder of a perfect binder device. The book blocks are printed by the printer. The book block enters the perfect binder, the cover is attached, and the book is trimmed. The finished book then emerges from a 3-knife trimmer. This kind of finishing can be done on an inline or offline finishing station.

Because of the various steps that were required in the production of the books, the order of the books coming out off the trimmer may not be the order of the books entering the process. It is important that the books produced are tied to the order that resulted in their being printed. This is necessary so that the produced books can be gathered together and shipped to the recipient as a single order. It is also important that the book manufacturer know a specific book has been manufactured and that the order has been fulfilled.

Thus, it is desired that information be placed on the cover of the book that will identify the book being produced, for example, including the identification of the order that produced the book. This can be done with an invisible bar code printed on the book cover. According to one exemplary embodiment of this disclosure, 8-10 characters are needed for this information.

Another scenario involves the printing of transactional documents (statements and bills) in a document factory and using invisible marks to assure that the statements are printed, properly stuffed in the envelope, and mailed. All this is done automatically through the disclosed job integrity system with invisible marks.

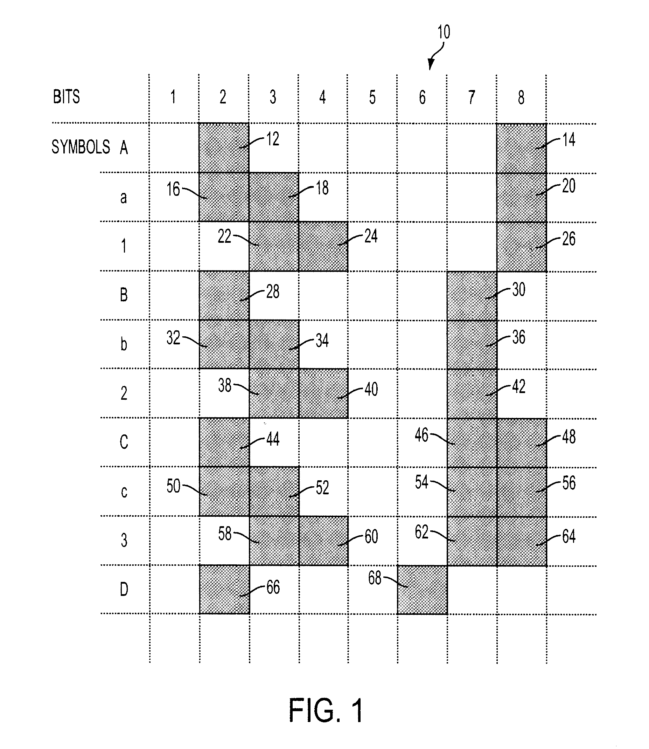

With reference to FIGURE 1, illustrated is an invisibly marked encoded sheet according to an exemplary embodiment of this disclosure. Notably, this disclosure and claims attached are not limited to a specific symbology or encoding pattern to communicate information to a reader.

The exemplary encoded sheet 10 comprises yellow patches 12, 14, 16, 18, 20, 22, 24, 26, 28, 30, 32, 34, 36, 38, 40, 42, 44, 46, 48, 50, 52, 54, 56, 58, 60, 62, 64, 66 and 68. To aid the reader in deciphering the information contained within the encoded sheet 10, hash marks are provided.

The encoded sheet 10 includes ten 8 bit strings of patches representing ten ASCII characters. For example, ASCII character "A" is represented as the 8 bit string of 01000001, where yellow patch 12 and 14 are representative of "1" and a white background represents a "0."

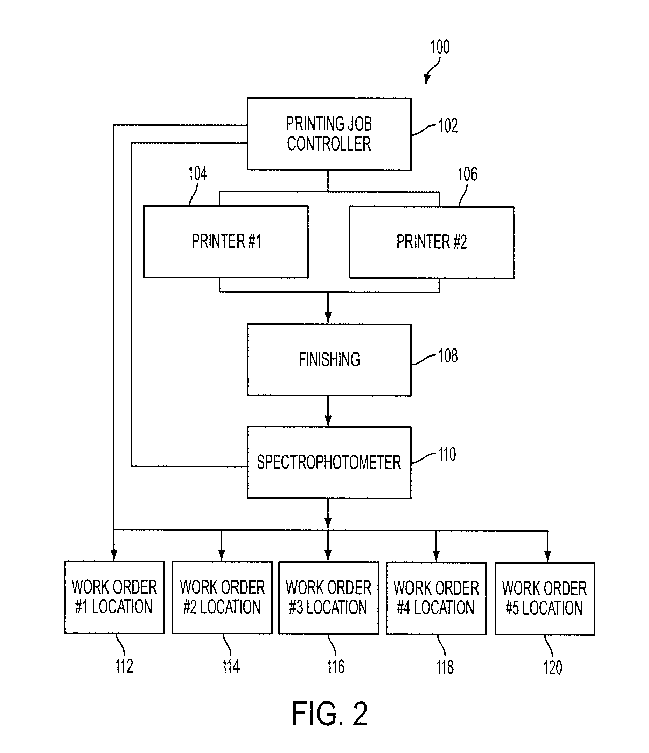

With reference to FIGURE 2, illustrated is a printing system utilizing an invisible marking encoding system according to an exemplary embodiment of this disclosure. The printing system 100 comprises a print job controller 102, a first printer 104, a second printer 106, a finisher 108, an inline spectrophotometer 110, a first work order location 112, a second work order location 114, a third work order location 116, a fourth work order location 118 and a fifth work order location 120.

In operation, the printing job controller 102 is operatively connected to printers 104 and 106, and the spectrophotometer 110.

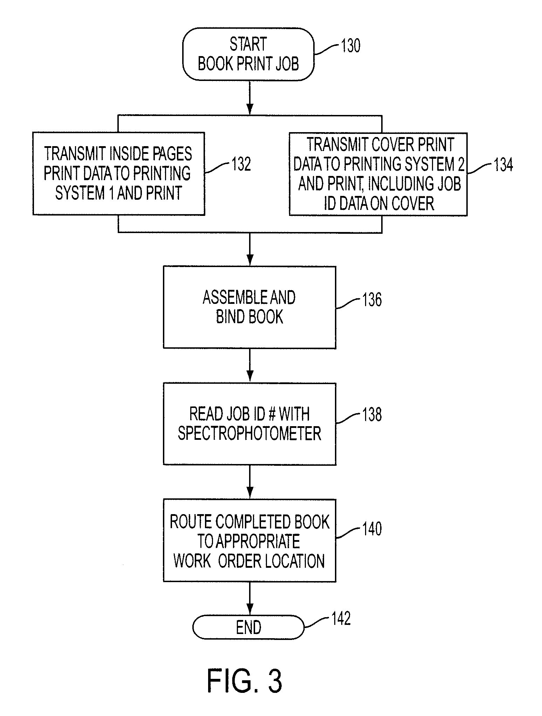

With reference to FIGURE 3, illustrated is a flow chart of a method of operating a printing system as illustrated in FIGURE 2, where the printing system includes an invisible marking encoding system as disclosed.

Initially, the print job data is loaded/transmitted to the print job controller 102.

Next, the print job is started 130, where the print job controller 102 transmits a book's inside pages print data to printing system one 132 and the print job controller transmits the book's cover print data to printing system two 134.

In addition to printing the book cover, printing system two also prints an invisible bar code to indicate the work order number associated with the book print job.

Next, the book is assembled and bound 136.

Next, the assembled book cover is read by a spectrophotometer 138, where the spectrophotometer reads the invisible bar codes printed on the book cover. This bar code information is transmitted to the print job controller which associates the book with a specific work order and work order routing location.

Next, the print job controller routes 140 the completed book to the appropriate work order location for further processing, such as shipping.

At this point, the operation of the printing system ends 142 until another print job is executed by the system.

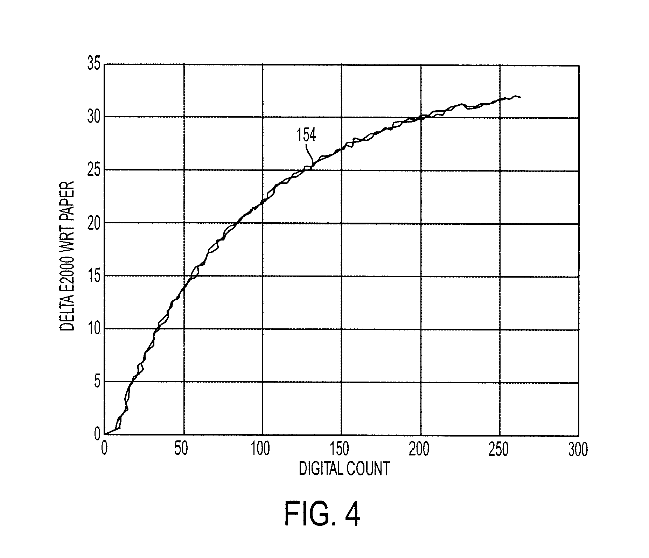

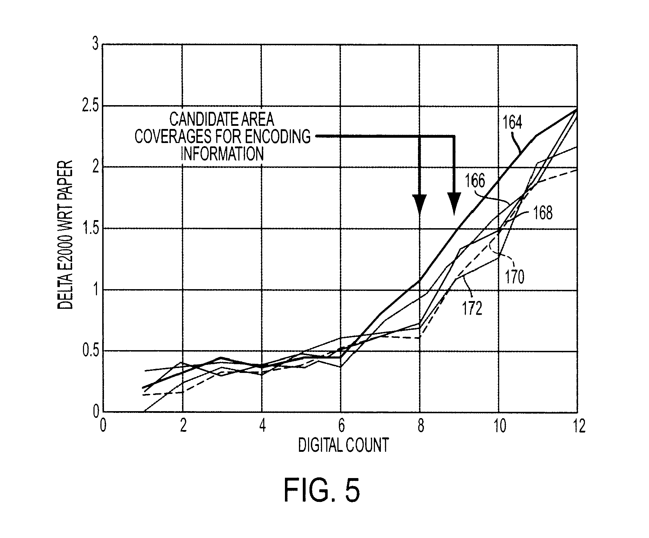

To provide the required reading of the invisible marks, the inline spectrophotometer has capabilities to distinguish yellow patches that are invisible to the human eye. Yellow patches with a digital count around 10 (<4%) or below are invisible to the eye and can be read with spectral sensors. With reference to FIGURES 4 and 5, illustrated are DeltaE2000 plots 154 of yellow color patches for digital counts 1 to 255. These plots illustrate measurements are done with an inline spectrophotometer for five different development sets. The DeltaE2000 numbers are calculated with respect to the paper white. Color patches are not visible for digital count below 10.

FIGURE 5 shows the expanded DeltaE2000 plots for invisible patches for five different sets, copy #1 164, copy #2 166, copy #3 168, copy #4 170, and copy #5 172. Variations in DeltaE2000 plots are due to developability changes in the yellow patch, not sensor measurement error. Once suitable area coverage is chosen (say in this case, area coverage of 8 or 9) the developability change can be reduced by regarding the patches as spot colors and using an automated spot color editor as disclosed in U.S. Patent Application Nos. 11/507,405, 11/507,406 and 11/607,643.

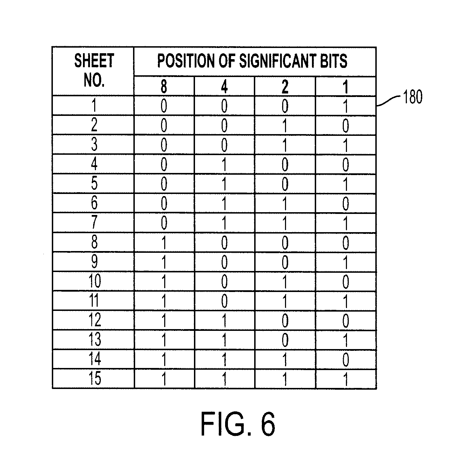

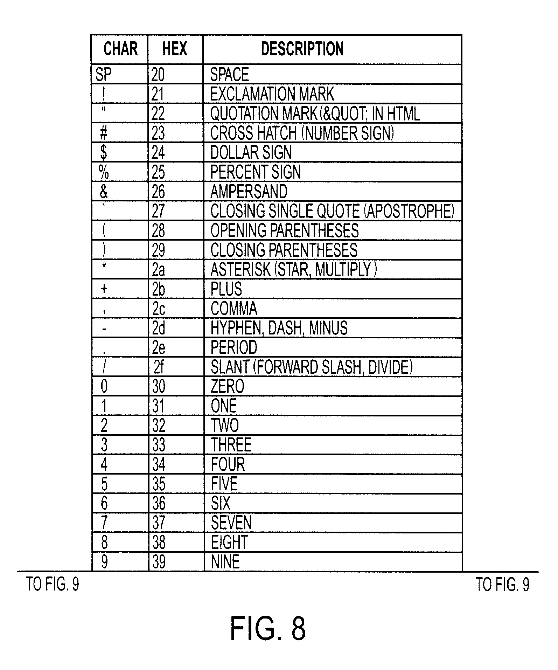

An additional experiment was carried out with coverage areas of 8, 9, and 10 by encoding the ascii (hexadecimal) numbers illustrated in FIGURES 8A-8C. To show how the approach disclosed works, sheets composed of only eleven patches were printed. Four out of the eleven patches are the active patches so that the hexadecimal numbers to encode go from 1 up to F. Since four patches are only active, the remaining ones, i.e. patches from 5 to 11, are used to compute the average of the white patches per printed sheet. The Table illustrated in FIGURE 6 shows the results which are expected with printed sheets including the coverage areas along with the encoded signals mentioned above.

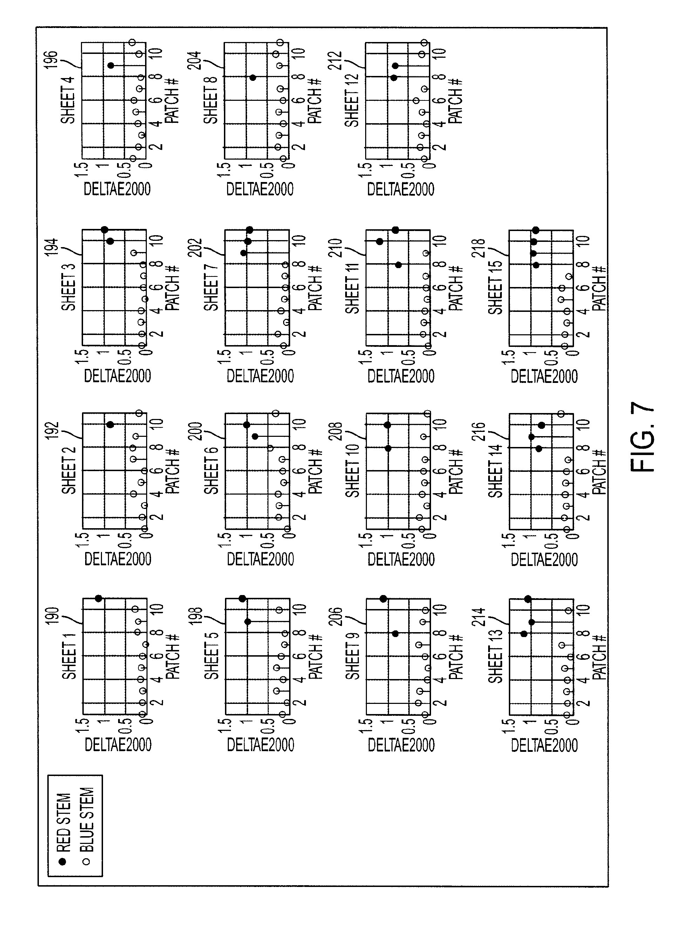

For example, the first sheet printed in the experiment contains a yellow patch in the first location and white patches in the rest of the 10 locations; the second sheet contains a yellow patch in the second location and white patches anywhere else; the seventh sheet contains yellow patches in the first, second, and third locations and white ones anywhere else. In other words, a yellow patch is developed whenever there is a "1" in the FIGURE 6 Table; otherwise, a white patch will be produced when a "0" appears in a location of the FIGURE 6 Table. Measurements of patches of fifteen sheets were taken and the DeltaE2000 values were computed with respect to the white patches. The results of this experiment for a coverage area equal to 8 are shown in Figure 7, where the allocation of yellow patches according to the FIGURE 6 table is illustrated. Specifically shown are DeltaE2000 plots for sheet 1 190, sheet 2 192, sheet 3 194, sheet 4 196, sheet 5 198, sheet 6 200, sheet 7 202, sheet 8 204, sheet 9 206, sheet 10 208, sheet 11 210, sheet 12 212, sheet 13 214, sheet 14 216, and sheet 15 218.

Notably, the DeltaE2000 values for yellow patches allocated, according to the FIGURE 6 Table, are more than twice the values of the white patches. For example, the yellow patch in the first location (red stem in Figure 7) of sheet 1 can be easily distinguished compared to the rest of the white patches; the yellow patches in locations 1, 2, 3, and 4 are also clearly distinguished compared to the rest of the patches in sheet 15. Therefore, a threshold may be used to encode a "1" as a bit in a specific location of a hexadecimal number if the DeltaE2000 value is greater than 0.6. Otherwise, that particular patch will be encoded as a "0." A relationship between the location of "1"s in the FIGURE 6 Table and the location of the red stems in Figure 7 can clearly be noticed. The same also applies to the "0"s in the FIGURE 6 Table and the blue stems in Figure 7.

With regard to the spectrophotometer, if an LED based spectrophotometer is used for sensing the encoded patches, then additional invisible markers can also be used to create markers for triggering LED drive circuits. For example, for use in an offline scenario, a full page back side cover sheet may be printed with 80 patches. This can represent 10 characters. A servo system capable of motion in x and y directions would be required, where an automatic triggering coordinates for LEDs (i.e., time intervals) and spatial position coordinates for the motors is preloaded into the sensor controller. For use in an inline scenario, triggering coordinates can be preprogrammed.

This disclosure provides a spectrophotometric solution for job integrity applications to read invisible symbology on a cover sheet (outside or inside of the page) insitu or offline. For offline use, a separate spectrophotometer is required to read the invisible marks.

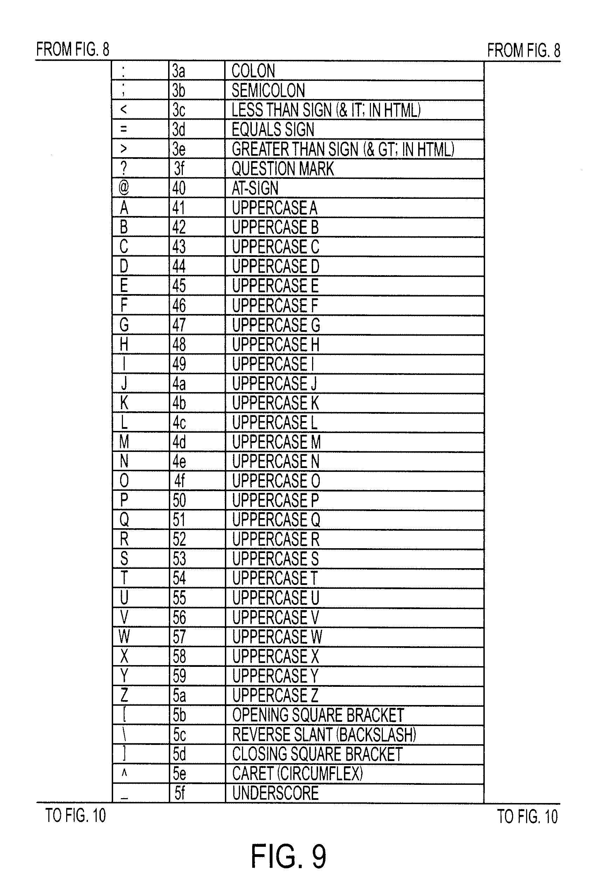

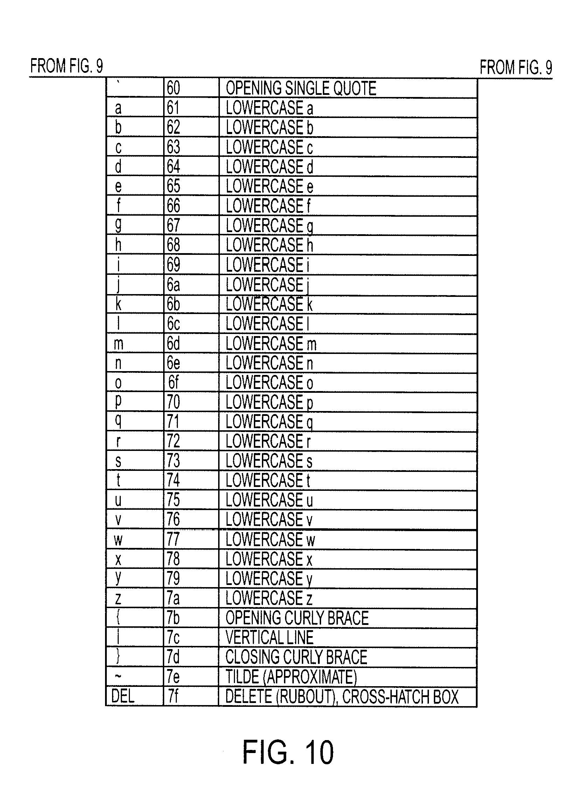

FIGURES 8-10 illustrate an example of an ASCII character set which defines 128 characters (0 to FF hexadecimal). These characters can be encoded with 8 active patches and one white patch. The white patch is required to extract paper white information, however, various other character sets can also be encoded based on the informational need. Also, increasing the number of active patches can increase the number of characters to be encoded in the job integrity system.

## Claims

1. An encoding system comprising:
a marking substrate;
a spot color marking device adapted to mark one or more spot colors on the substrate; and
a spectrophotometer adapted to read one or more spot colors marked on the substrate,
wherein the marking device is configured to control the density of the one or more spot colors to less than a predetermined threshold density value associated with the spot color to produce a spot color substantially undetectable by a human naked eye.

2. The encoding system according to claim 1, wherein the spot color is yellow.

3. The encoding system according to claim 1 or claim 2, wherein the predetermined threshold density value is less than or equal to 4%.

4. The encoding system according to claim 1, wherein the one or more spot colors comprise:
a yellow color patch, wherein the yellow color patch area is less than or equal to 1 square centimeter and the predetermined threshold density value is less than or equal to 4%.

5. The encoding system according to any of the preceding claims, wherein the spot color marking device marks one or more bar codes on the substrate.

6. The encoding system according to claim 5, further comprising:
a controller operatively connected to the spectrophotometer, the controller configured to decode one or more bar codes marked on the substrate, wherein the bar code is binary and a first data bit state is associated with a first spot color patch and a second data bit state is associated with the substrate color.

7. The encoding system according to claim 6, wherein the controller associates the first data bit state with a first range of spectrophotometer measured light intensity and a second data bit state with a second range of spectrophotometer measured light intensity.

8. A print job encoding system comprising:
a spot color marking device adapted to mark a spot color on a print media in a predetermined pattern, the spot color density controlled to be less than or equal to a predetermined threshold density value, wherein a marked spot color on the print media is substantially undetectable by a human naked eye;
a spectrophotometer adapted to measure the relative light intensity associated with the print media and the spot colors marked on the print media; and
a controller operatively connected to the spectrophotometer, the controller configured to decode the predetermined pattern, wherein the relative light intensity of the print media and the spot color marked on the print media provide a first binary state and a second binary state, respectively.

9. The print job encoding system according to claim 8, wherein the spot color is yellow.

10. The print job encoding system according to claim 8 or claim 9, wherein the predetermined threshold density is less than or equal to 4%.

11. The print job encoding system according to any of claims 8 to 10, wherein the predetermined pattern communicates print job attributes and/or commands.

12. The print job encoding system according to any of claims 8 to 11, the system being adapted to print one or more banner print media sheets associated with one or more respective print jobs, wherein the banner print media sheets are spot color marked with one or more bar codes, the bar codes representing print job attributes and/or print job commands associated with the respective print job.

13. The print job encoding system according to any of claims 8 to 12, wherein the print media is spot color marked with one or more bar codes in a print media area outside of all image and text printing areas associated with the print media.

14. A method of encoding one or more print jobs comprising:
marking one or more print media associated with one or more respective print jobs, wherein the one or more print media is marked with a spot color producing a predetermined spot color pattern on the print media, and the spot color is less than or equal to a predetermined threshold density value to produce a spot color marked on the print media which is substantially undetectable by a human naked eye; and
reading the predetermined spot color pattern with a spectrophotometer, wherein the relative intensity of the print media and the spot color marked on the print media represent a first and second binary state, respectively, the sequence of the first and second binary states representing attributes and/or commands associated with a print job.

15. A xerographic printing system comprising:
a color image marking device; and
a spectrophotometer operatively connected to the color image marking device wherein the color image marking device is adapted to mark a print media with a yellow spot color bar code, the yellow spot mark density less than or equal to 4%, and the spectrophotometer reads the yellow spot color bar code representing attributes or commands associated with a print job.
